# EUROPÄISCHE PATENTSCHRIFT

(11) **EP 3 158 689 B1**
(45) Veröffentlichungstag und Bekanntmachung des Hinweises auf die Patenterteilung: **16.10.2019**
(21) Anmeldenummer: 15725237.0
(22) Anmeldetag: 02.06.2015
(51) Int. Cl.: H04L 12/46, H04L 12/24, H04L 12/40

(54) **ROUTER UND VERFAHREN ZUM EMPFANGEN UND VERTEILEN VON DATEN**
ROUTER AND METHOD FOR RECEIVING AND DISTRIBUTING DATA
ROUTEUR ET PROCÉDÉ DE RÉCEPTION ET DE DISTRIBUTION DE DONNÉES

(30) Priorität: 20.06.2014 DE 102014009256
(43) Veröffentlichungstag der Anmeldung: 26.04.2017
(73) Patentinhaber: Audi AG, 85045 Ingolstadt (DE)
(72) Erfinder: GANSLMEIER, Thomas, 93077 Bad Abbach (DE); OLDEWURTEL, Frank, 58089 Hagen (DE)
(74) Vertreter: Bauer, Dominik Michael
(86) Internationale Anmeldenummer: PCT/EP2015/001119
(87) Internationale Veröffentlichungsnummer: WO 2015/192945

(56) Entgegenhaltungen:
- WO-A2-2010/045652
- US-A1- 2014 369 275

## Beschreibung

Die vorliegende Erfindung betrifft einen Router zum Empfangen und Verteilen von Daten.

Außerdem betrifft die Erfindung ein Fahrzeug mit einem Router zum Empfangen und Verteilen von Daten. Das Fahrzeug kann ein Personenkraftwagen, ein Bus, ein Lastkraftwagen, eine Baumaschine, eine Landmaschine, ein Schienenfahrzeug, ein Lift, ein Wasserfahrzeug oder ein Luftfahrzeug sein.

Darüberhinaus betrifft die Erfindung ein Verfahren zum Empfangen und Verteilen von Daten.

Die WO 2010/045652 A2 beschreibt ein Mobiltelefon, das als Konvergenzplattform zum Empfangen und Verteilen von Daten vorbereitet ist. Die Konvergenzplattform dient als Router für einen nahtlosen Datenaustausch zwischen einer Vielzahl von digitalen Geräten und dem Internet. Die Konvergenzplattform empfängt von jedem Gerät eine detaillierte Beschreibung der Fähigkeiten des Geräts.

Die nachveröffentlichte US 2014/0369275 A1 beschreibt eine intelligente, persönliche Netzübergangsvorrichtung zum Empfangen und Verteilen von Daten von und zu unterschiedlichen Arten von Endgeräten. Eine vorgeschlagene Ausführungsform sieht vor, dass die Netzübergangsvorrichtung jedem Endgerät ein Verzeichnis von Diensten bereitstellt und von den Endgeräten Anfragen für Dienste empfängt, die in dem Verzeichnis enthalten sind, wobei die Netzübergangsvorrichtung im Namen eines Endgeräts ausgewählte Dienste ausführt, wobei sie Verarbeitungsressourcen der Netzübergangsvorrichtung nutzt.

Die US 2012/0 005 360 A1 beschreibt ein Verfahren zum automatischen Erkennen von Geräten. Hierbei verbreitet ein Gateway eine Auffindungsnachricht per Rundsenden und wartet auf Antworten von Nutzergeräten auf die rundgesendete Auffindungsnachricht. Außerdem ist vorgesehen, dass festgestellt wird, ob das Nutzergerät erkannt wurde.

Die US 2012/0 206 645 A1 beschreibt eine Sammelvorrichtung für Inhalte in einem mobilen Netz, das einem mobilen Teilnehmergerät Inhalte bereitstellt.

Die US 2001/0 047 517 A1 beschreibt Verfahren und Geräte zum Bereitstellen und Konvertieren von Daten, die unterschiedlichen Multimedia-Kontent darstellen.

Die WO 2013/025786 A1 beschreibt ein Smartphone, das als ein Gateway zwischen einem entfernten System und einem Basis-Computer genutzt wird.

Die US2004/0248513 A1 beschreibt ein Kommunikationssystem, das eine Erkennungskomponente und eine Konfigurationskomponente aufweist. Die Erkennungskomponente ist dazu ausgebildet, mehrere Geräte zu erkennen, die miteinander über eine belebtes Medium verbunden sind. Die Konfigurationskomponente ist dazu ausgebildet, eine Konfiguration zwischen einer Teilmenge der Geräte zu konfigurieren.

Heutige Geräte verwenden meistens ihr eigenes "Ökosystem" und unterschiedliche Kommunikationstechniken. Daher ist heute eine einfache und übergreifende (medienbruchfreie) Vernetzung und Nutzung unterschiedlicher Geräte in der Regel nicht möglich. Folge ist, dass damit ein wesentlicher Mehrwert eines grundsätzlich technisch möglichen weitgehend nahtlosen Übergangs von Information und Medien zwischen heterogenen verteilten Geräten ungenutzt bleibt.

Es ist eine Aufgabe der vorliegenden Erfindung, einen Router bereitzustellen, mit dem nutzerfreundlichere gemischte Nutzung von Kommunikationsgeräten, Unterhaltungsgeräten, Navigationsgeräten und Datenverarbeitungsgeräten als mit bekannten Routern möglich ist.

Diese Aufgabe wird erfindungsgemäß durch einen Router nach Anspruch 1, ein Fahrzeug nach Anspruch 8 und ein Verfahren nach Anspruch 9 gelöst. Vorteilhafte Weiterbildungen der vorliegenden Erfindungen sind in den Unteransprüchen angegeben.

Entsprechend der vorliegenden Erfindung wird ein Router zum Empfangen und Verteilen von Daten bereitgestellt, der einen Fähigkeitsparameter-Empfänger, einen Gerätekonfigurator, einen Nutzdaten-Empfänger und einen Nutzdaten-Verteiler aufweist. Der Fähigkeitsparameter-Empfänger ist zum Empfangen von Fähigkeitsparametern von mindestens zwei Geräten ausgebildet, die an dem Router anschließbar sind. Der Gerätekonfigurator ist zum Auswählen und/oder Konfigurieren mindestens eines der Geräte unter Berücksichtigung der Fähigkeitsparameter ausgebildet, wobei der Gerätekonfigurator dazu vorbereitet ist, ausgehend von von den Geräten gemeldeten Fähigkeiten gerätespezifische Gerätekonfigurationsdaten zu erstellen und an das jeweilige Gerät auszuliefern. Der Nutzdaten-Empfänger ist zum Empfangen von Daten von mindestens einem der Geräte ausgebildet. Der Nutzdaten-Verteiler ist zum Verteilen von Daten an mindestens eines der Geräte ausgebildet. Der Router ist Teil eines Mobiltelefons, eines Implantats, einer Uhr, einer Brille, eines Hörgeräts, eines Gürtels, einer Fußfessel, eines Schmuckstücks, eines Piercings, eines Armbands und/oder eines anderen Kleidungsgegenstands und dazu vorbereitet, den Nutzer gegenüber Geräten, die sich in der Umgebung des Nutzers befinden, erkennen zu geben und/oder auszuweisen. Ein erstes der mindestens zwei an dem Router anschließbaren Geräte kann beispielsweise über eine kabelgebundene Verbindung oder über einen Lichtwellenleiter oder über eine kabellose Verbindung an dem Router anschließbar sein. Für jedes weitere an dem Router anschließbare Gerät gilt ebenso, dass es beispielsweise über eine kabelgebundene Verbindung oder über einen Lichtwellenleiter oder über eine kabellose Verbindung an dem Router anschließbar sein kann.

Ein entsprechendes Fahrzeug weist einen erfindungsgemäßen Router auf.

Entsprechend umfasst das erfindungsgemäße Verfahren zum Empfangen und Verteilen von Daten folgende Schritte: Übermitteln von Fähigkeitsparametern von mindestens zwei Geräten, die an einem Router angeschlossen sind; Auswählen und/oder Konfigurieren mindestens eines der Geräte unter Berücksichtigung der Fähigkeitsparameter; Erstellen und Ausliefern gerätespezifischer Gerätekonfigurationsdaten an das jeweilige Gerät ausgehend von von den Geräten gemeldeten Fähigkeiten; Empfangen von Daten von mindestens einem der Geräte und Verteilen von empfangenen Daten an mindestens eines der Geräte. Der Router ist Teil eines Mobiltelefons, eines Implantats, einer Uhr, einer Brille, eines Hörgeräts, eines Gürtels, einer Fußfessel, eines Schmuckstücks, eines Piercings, eines Armbands und/oder eines anderen Kleidungsgegenstands und dazu vorbereitet, den Nutzer gegenüber Geräten, die sich in der Umgebung des Nutzers befinden, erkennen zu geben und/oder auszuweisen.

Ein Konzept der vorliegenden Erfindung kann darin gesehen werden, dass vor dem Empfangen von Daten am Router mindestens eines der am Router anschließbaren Geräte unter Berücksichtigung der Fähigkeitsparameter ausgewählt wird und/oder dass vor dem Verteilen von Daten mindestens eines der am Router anschließbaren Geräte unter Berücksichtigung der Fähigkeitsparameter ausgewählt wird. Durch diese Maßnahme kann ein Betrieb des Routers optimal an Fähigkeiten aktuell verfügbarer Geräte angepasst werden, welche für den Router Datenquellen und Datensenken darstellen.

In einer bevorzugten Ausführungsform umfasst der Fähigkeitsparameter eine Angabe über eine Informations- und/oder Medienart, eine Angabe über ein Protokoll, eine Angabe über eine Displaygröße, eine Angabe über ein Auflösungsvermögen, eine Angabe über eine Bandbreite und/oder eine Angabe über eine Bedienart. Hierdurch kann eine Auswahl und/oder Konfiguration der Geräte optimal an eine aktuell angebotene Informations- und/oder Medienart, ein aktuell verfügbares Protokoll, eine aktuell verfügbare Displaygröße, ein aktuell verfügbares Auflösungsvermögen, eine aktuell verfügbare Bandbreite und/oder eine aktuelle Angabe über eine Bedienart angepasst werden.

Davon unabhängig kann der Router einen Gerätekonfigurator zum Auswählen und/oder Konfigurieren eines der Geräte aufweisen, die an dem Nutzdaten-Empfänger und/oder an dem Nutzdaten-Verteiler anschließbar sind. Hierdurch kann eine Schnittstellenanpassung und/oder eine Protokollanpassung des Gerätes an eine router-interne Schnittstelle durchgeführt werden. Der Gerätekonfigurator kann dazu vorbereitet sein, mindestens eines der Geräte (die an dem Nutzdaten-Empfänger und/oder an dem Nutzdaten-Verteiler anschließbar sind) unter Berücksichtigung von Vorgaben durch einen Nutzer und/oder unter Berücksichtigung eines Auswahlalgorithmus und/oder eines Konfigurationsalgorithmus (beispielsweise eines Autokonfigurationsalgorithmus) auszuwählen und/oder zu konfigurieren. Das Konfigurieren (bzw. der Konfigurationsalgorithmus) kann das Auswählen (bzw. den Auswahlalgorithmus) umfassen.

Außerdem kann es von Vorteil sein, wenn der Router einen ersten Protokollwandler zum Wandeln von Daten, die nach einem ersten Protokoll codiert sind, in Daten aufweist, die nach einem zweiten Protokoll codiert sind. Der erste Protokollwandler ist typischerweise für ein Wandeln eines von einem Gerät unterstützten ersten Protokolls in ein internes Protokoll (zweites Protokoll) vorbereitet. Der erste Protokollwandler kann beispielsweise für ein Wandeln einer oder mehrerer unterer Schichten eines umfassenderen Protokollstapels vorbereitet sein, gemäß dem die Daten codiert sind.

Eine besonders bevorzugte Weiterbildung sieht vor, dass der Router einen zweiten Protokollwandler zum Wandeln von Daten, die nach einem zweiten Protokoll codiert sind, in über den ersten Protokollwandler zu versendende Daten aufweist, die nach einem dritten Protokoll codiert sind. Durch eine gleichzeitige Anwendung der beiden vorgenannten Maßnahmen ist eine mittelbare Übertragung von Daten von einem ersten Gerät zu einem zweiten Gerät möglich, wobei die Datenübertragung auf den Anschlussschnittstellen für die beiden Geräte nach einem identischen Protokoll oder nach zwei unterschiedlichen Protokollen erfolgen kann. Auch kann so eine mittelbare Übertragung von Daten von einem ersten Gerät zu demselben ersten Gerät erfolgen, wobei die Datenübertragung auf verschiedenen Anschlussschnittstellen des ersten Geräts nach zwei unterschiedlichen Protokollen erfolgt. Der zweite Protokollwandler kann beispielsweise für ein Wandeln einer oder mehrerer oberer Schichten eines umfassenderen Protokollstapels vorbereitet sein, gemäß dem die Daten codiert sind.

Besondere Vorteile ergeben sich, wenn der Router mindestens eine (vorzugsweise mehrere) der folgenden Schnittstellen aufweist: eine LAN-Schnittstelle, eine WLAN-Schnittstelle, eine Mobilfunkschnittstelle, eine Bluetooth-Schnittstelle, eine NFC-Schnittstelle und/oder ein Zigbee-Schnittstelle ist. Hierdurch stellt der Router mindestens eines der für Eingabegeräte und/oder Ausgabegeräte heute üblichen Schnittstellen bereit. An den Router über Funk und/oder Kabel anschließbare Geräte sind beispielsweise Unterhaltungsgeräte (beispielsweise Fernsehgeräte), Kommunikationsgeräte (beispielsweise Smartphones), Datenverarbeitungsgeräte (beispielsweise Notebooks), intelligente Kleidung (beispielsweise Augmented-Reality-Brillen und/oder Virtual-Reality-Brillen; Body Sensors, SmartWatches), Navigationsgeräte und Infotainment-Geräte aus dem automotiven Umfeld.

Auch kann es zweckmäßig sein, wenn das erste Protokoll ein LAN-Protokoll, ein WLAN-Protokoll, ein Mobilfunk-Protokoll, ein Bluetooth-Protokoll, ein NFC-Protokoll oder ein Zigbee-Protokoll ist, und/oder wenn das zweite Protokoll ein LAN-Protokoll, ein WLAN-Protokoll, ein Mobilfunk-Protokoll, ein Bluetooth-Protokoll, ein NFC-Protokoll oder ein Zigbee-Protokoll ist. Hierdurch unterstützt der Router mindestens eines der für Eingabegeräte und/oder Ausgabegeräte heute üblichen Protokolle.

Der Router ist Teil eines mobilen Gerätes, eines Mobiltelefons, eines Implantats, einer Uhr, einer Brille, eines Hörgeräts, eines Gürtels, einer Fußfessel, eines Schmuckstücks, eines Piercings, eines Armbands und/oder eines anderen Kleidungsgegenstands. Dies erleichtert einem Nutzer, den Router ständig mit sich zu tragen.

Vorteilhaft ist, wenn der Router mindestens zwei Teilvorrichtungen umfasst, die voneinander mechanisch getrennt sind und miteinander über mindestens eine folgender Schnittstellen verbunden sind: eine Funkschnittstelle, eine Infrarot-Schnittstelle, eine Ultraschallschnittstelle. Eine der beiden Teilvorrichtungen kann beispielsweise ein Gegenstand sein, den ein Nutzer üblicherweise direkt am Körper trägt (beispielsweise eine Armbanduhr, ein Fingerring, eine Fußfessel, ein Piercing, ein Armband, eine Brille, ein Hörgerät oder ein Implantat). So kann eine starke physikalische Bindung der ersten Teilvorrichtung und somit zumindest eines Teils des Routers an den Körper des Nutzers erreicht werden. Die andere der beiden Teilvorrichtungen kann dann beispielsweise ein etwas voluminöseres Gerät sein, das der Nutzer (von Ausnahmesituationen abgesehen) ebenfalls in der Regel mit sich führt, wie beispielsweise ein Smartphone oder einen Gürtel. Wenn die andere Teilvorrichtung voluminöser als die erste Teilvorrichtung ist, ist eher möglich, die für den Router erforderliche Elektronik und Stromversorgung in der Teilvorrichtung anzuordnen.

Die vorliegende Erfindung wird nun anhand der beigefügten Zeichnungen näher erläutert, die jeweils ein Beispiel darstellen. Dabei zeigt:
- Fig. 1: schematisch ein Blockdiagramm mit dem Router und daran angeschlossenen Netzwerken und Geräten;
- Fig. 2: schematisch ein Anwendungsszenario für einen Router; und
- Fig. 3: schematisch einen Ablauf eines Verfahrens zum Empfangen und Verteilen von Daten.

Die nachfolgend näher beschriebenen Ausführungsbeispiele stellen bevorzugte Ausführungsformen der vorliegenden Erfindung dar.

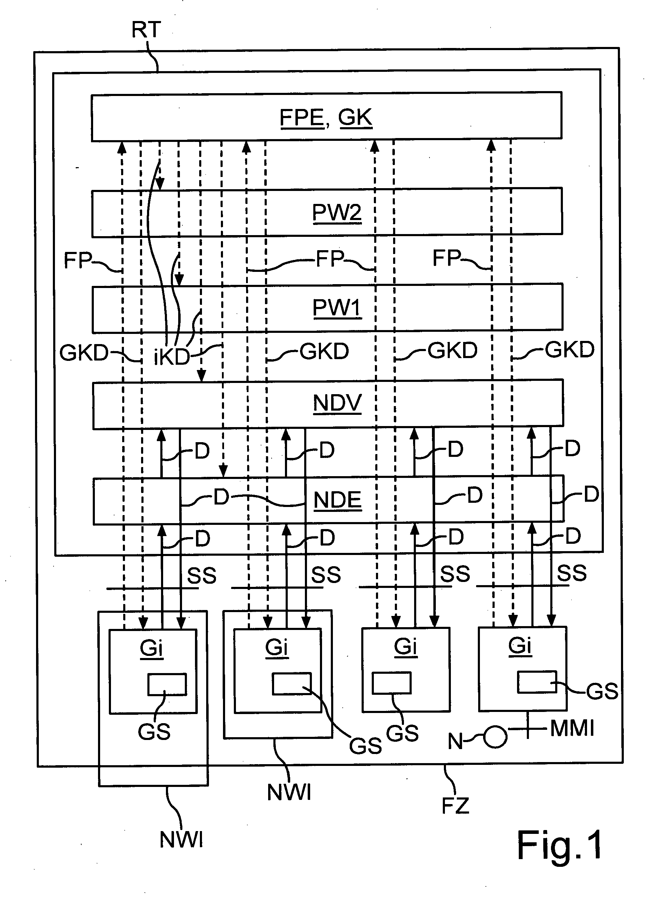

Der in Fig. 1 gezeigte Router RT umfasst in der Regel folgende Komponenten: einen Fähigkeitsparameter-Empfänger FPE, einen Nutzdaten-Empfänger NDE, einen Nutzdaten-Verteiler NDV und einen Gerätekonfigurator GK. Typischerweise weist der Router RT auch einen ersten PW1 und einen zweiten PW2 Protokollwandler auf.

Der erste Protokollwandler PW1 dient typischerweise einem Wandeln eines von einem Gerät unterstützten ersten Protokolls in ein internes Protokoll (zweites Protokoll). Der erste Protokollwandler PW1 kann somit als Protokollabstrahierer angesehen werden.

Der zweite Protokollwandler PW2 dient typischerweise einem Wandeln des zweiten Protokolls in ein von einem Gerät unterstütztes drittes Protokoll. Die Kaskadierung des ersten PW1 und zweiten PW2 Protokollwandlers bildet somit einen Transcoder, der dazu vorbereitet ist, Daten zu transcodieren. Mittels des Transcoders kann ein Datenformat an Fähigkeiten unterschiedlicher Geräte Gi angepasst werden. So können Geräte Gi, die unterschiedliche Kommunikationsverfahren anwenden, Nutzdatenströme austauschen. Die Datenströme von am Router RT angeschlossenen Geräten Gi zu am Router RT angeschlossenen Geräten können über den Router RT ausgetauscht werden. Alternativ oder zusätzlich können die Datenströme von am Router RT angeschlossenen Geräten Gi zu am Router RT angeschlossenen Geräten Gi vom Router RT initialisiert, organisiert, gesteuert und/oder überwacht über einen Übertragungsweg übertragen werden. Das Datenformat kann jegliche Merkmale einer Datencodierung umfassen (beispielsweise eine zeitliche Reihenfolge von zu übertragenen Informationselementen, Prüfbits, Kopffelder, Signalisierungsinformation, Metadaten).

Unter Transcodieren wird hier beispielsweise ein Anpassen eines Datenformats (beispielsweise eines AAC-Codierverfahren auf ein MP3-Codierverfahren) verstanden, wobei eine Bitrate und/oder eine Kompressionsrate eines Datenstroms und/oder eine Auflösung für eine Ausgabe auf einem Display angepasst wird. Transcodieren kann als ein Umformen des Datenstroms aus Anwendungssicht verstanden werden. Um mittels des Routers RT beispielsweise eine Kommunikation zwischen WLAN-Geräten und Bluetooth-Geräten zu unterstützen, kann der Router RT sowohl mindestens eine Kommunikationsschnittstelle für WLAN als auch mindestens eine Kommunikationsschnittstelle für Bluetooth aufweisen. Der Router RT kann dann Daten beispielsweise von einem WLAN-Gerät über die WLAN-Schnittstelle empfangen und die empfangenen WLAN-Daten passend für Bluetooth umformen. Dieses Umformen kann als Protokollumsetzung bezeichnet werden. Der Router RT kann für Bluetooth passend umgeformten Daten dann über seine Bluetooth-Schnittstelle SS an ein Bluetooth-Gerät senden. Dies kann als eine Umformung aus Kommunikationssicht angesehen werden.

Der Informationsfluss zwischen einem ersten Gi und einem zweiten Gi Gerät (das jeweils an dem Router angeschlossen ist) ist typischerweise wie folgt:
Der Nutzdaten-Empfänger NDE übermittelt Daten D, die von dem ersten Gerät Gi gemäß einem ersten Protokoll an einer erste Schnittstelle SS bereitgestellt werden, dem ersten Protokollwandler PW1. Der erste Protokollwandler PW1 wandelt diese Daten D in ein zweites Protokoll und übermittelt die gemäß dem zweiten Protokoll codierten Daten D dann dem Nutzdaten-Verteiler NDV und/oder dem zweiten Protokollwandler PW2. In der ersten Alternative stellt der NDV die nach dem zweiten Protokoll codierten Daten D über eine zweite Schnittstelle SS einem zweiten Gerät Gi bereit.

In der zweiten Alternative wandelt der zweite Protokollwandler PW2 die nach dem zweiten Protokoll codierten Daten D in ein drittes Protokoll und übermittelt die nach dem dritten Protokoll codierten Daten D dem ersten Protokollwandler PW1. Der erste Protokollwandler PW1 wandelt dann diese Daten, welche nach dem dritten Protokoll codiert sind, in ein Protokoll, das zur Schnittstelle SS passt, an der das zweite Gerät Gi angeschlossen ist, und übermittelt diese Daten D dann an den Nutzdaten-Verteiler NDV. Der Nutzdatenverteiler NDV stellt die gewandelten Daten D dann über eine zweite Schnittstelle SS dem zweiten Gerät Gi bereit.

Der erste Protokollwandler PW1 umfasst typischerweise mehrere Instanzen. Gleiches gilt für den zweiten Protokollwandler PW2.

Der Übersichtlichkeit halber wurde in der Fig. 1 auf eine explizite Darstellung der Datenflüsse zwischen NDE und PW1, zwischen PW1 und PW2, zwischen PW2 und PW1, sowie zwischen PW1 und NDV verzichtet.

Optional kann der erste Protokollwandler PW1 einen ersten Formatwandler umfassen. Ebenfalls optional kann der zweite Protokollwandler PW2 einen zweiten Formatwandler umfassen. Vorliegend wird eine Formatwandlung im weiten Sinne auch als eine Protokollwandlung angesehen. Die Formatwandlung kann auch eine Änderung einer Auflösung oder Bandbreite umfassen. Die Formatwandlung kann auch eine Aufteilung eines Datenstroms (beispielsweise eine Aufteilung eines Video-Datenstrom in einen Tondatenstrom und einen Bilddatenstrom) umfassen. So kann ein Video auf unterschiedlichen Geräten Gi zeitsynchron abgespielt werden (beispielsweise das Bewegtbild über ein Fernsehgerät FG und ein Tondatenstrom über einen Kopfhörer BK, der eine Bluetooth-Schnittstelle aufweist).

Der Fähigkeitsparameter-Empfänger FPE ist dazu vorbereitet, von Geräten Gi, die sich mit dem Router RT verbinden oder mit dem Router RT verbunden werden, Angaben über deren Fähigkeiten zu empfangen. Die Fähigkeitsangaben können beispielsweise Angaben über eine Displaygröße, über Informations- und/oder Medienarten, über Formate und/oder über Ein-/Ausgabearten sein, die von dem jeweiligen Gerät Gi unterstützt werden.

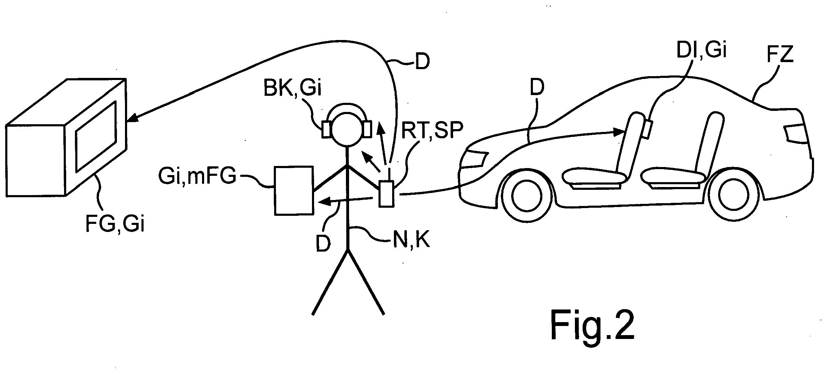

Der Gerätekonfigurator GK ist dazu vorbereitet, ausgehend von den Geräten Gi gemeldeten Fähigkeiten gerätespezifische Gerätekonfigurationsdaten GKD zu erstellen und an das jeweilige Gerät Gi auszuliefern. Die Gerätekonfigurationsdaten GKD berücksichtigen die gemeldeten Fähigkeiten der Geräte Gi, die an dem Router RT angemeldet sind. Vorzugsweise passt der Gerätekonfigurator GK die Gerätekonfigurationsdaten GKD dynamisch an veränderliche Verfügbarkeiten und/oder Fähigkeiten der Geräte Gi und/oder an veränderliche Eigenschaften der zu übertragenden Daten an. Die Konfiguration des jeweiligen Geräts Gi kann ganz oder teilweise auch mittels Einrichtung einer situationsabhängigen Bedienoberfläche (beispielsweise für eine Anzeigeeinheit DI (siehe Fig. 2) und/oder eine Bedieneinheit) erfolgen. Neben den Gerätekonfigurationsdaten GKD sind typischerweise auch interne Konfigurationsdaten iKD zur Konfiguration des ersten PW1 und/oder zweiten PW2 Protokollwandlers, des Nutzdatenempfängers NDE und des Nutzdatenverteilers NDV vorgesehen.

Der Router RT weist typischerweise Schnittstellen SS für verschiedene Schnittstellenstandards auf. Der Router RT kann sich mit externen Geräten Gi verbinden, sofern sie eine passende Schnittstelle SS aufweisen. Um ein externes Gerät Gi mit dem Router RT verbindbar zu machen, kann ein Software Development Kit bereitgestellt werden, mit dem der Hersteller des Geräts Gi eine oder mehrere Schnittstellen SS des Routers RT in einer Gerätesoftware GS des externen Geräts Gi einbinden kann. Hierdurch kann eine nahtlose Kommunikation zwischen Geräten Gi mit unterschiedlichen Schnittstellen SS ermöglicht werden. Alternativ oder zusätzlich kann der Router RT auch dafür vorbereitet sein, einen Datenstrom mittels De-Multiplexens auf verschiedene Geräte Gi aufzuteilen. Alternativ oder zusätzlich kann der Router RT auch dafür vorbereitet sein, mehrere Datenströme mittels Multiplexens einem einzelnen Gerät Gi zuzuleiten. Die Auswahl und/oder Konfiguration von Datenquellen und Datensenken kann ganz oder teilweise mittels der jeweiligen Geräte Gi realisiert werden, denen mittels des Routers RT individuelle Gerätekonfigurationsdaten GKD bereitgestellt werden. Die Gerätekonfigurationsdaten GKD werden entsprechend der Fähigkeiten des Geräts Gi vom Router RT erstellt.

An den Router RT über Funk und/oder Kabel anschließbare Geräte Gi sind beispielsweise Unterhaltungsgeräte (beispielsweise Fernsehgeräte), Kommunikationsgeräte (beispielsweise Smartphones), Datenverarbeitungsgeräte (beispielsweise Notebooks), intelligente Kleidung (beispielsweise Augmented-Reality-Brillen und/oder Virtual-Reality-Brillen; Body Sensors, SmartWatches), Navigationsgeräte und Infotainment-Geräte aus dem automotiven Umfeld.

Durch den Router RT können Informations- und/oder Medieninhalte weitgehend geräteunabhängig verteilt und abgespielt werden. Bedienung und Anzeige können dynamisch und entsprechend den zur Verfügung stehenden Geräten Gi und deren Fähigkeiten angepasst werden.

Der Router RT kann ein mobiles Gerät, ein Mobiltelefon, ein Implantat, eine Uhr, eine Brille, ein Hörgerät, ein Gürtel, eine Fußfessel, ein Schmuckstück, ein Piercing, ein Armband und/oder ein anderer Kleidungsgegenstand sein.. Der Router RT kann mit dem Körper K eines Nutzers N in abnehmbarer Seite verbunden sein oder fest verbunden sein.

Durch Anwendung des beschriebenen Routers RT und des beschriebenen Verfahrens 100 ist eine vollständige und hochintegrierte Vernetzung heterogener Geräte Gi möglich. Im Gesamtsystem GS ist ein Zugriff auf viele Informationen und Medien möglich. Der beschriebene Router RT und das beschriebene Verfahren 100 ermöglichen einen (medienbruchfreien) Datenfluss über Systembereiche hinweg, in denen eine Verwendung unterschiedlicher Datenformate und/oder unterschiedlicher Kommunikationsprotokolle vorgesehen ist. Der Nutzer N kann mittels des Routers RT eine Vernetzung zu mehreren Netzwerken NW und Geräten Gi herstellen, die sich in seiner aktuellen Umgebung befinden. Vorzugsweise gehört zu den mehreren Netzwerken NW auch mindestens ein öffentliches und/oder mindestens ein nichtöffentliches Mobilfunknetz (beispielsweise ein Netz nach einem GSM-, UMTS- und/oder LTE-Standard).

Typischerweise hat der Router RT eine digitale Identität, die vorzugsweise mittels Sicherheitsmechanismen absicherbar ist.

Eine besonders bevorzugte Option sieht vor, dass der Router RT einem Nutzer N individuell zugeordnet ist. Der Nutzer N kann sich dann gegenüber Geräten Gi, die sich in seiner Umgebung befinden, mittels des Routers RT zu erkennen geben und/oder ausweisen und eine Vernetzung mit einem oder mehren aktuell verfügbaren Netzwerken NWi und einem oder mehreren aktuell verfügbaren Geräten Gi herstellen.

Eine Weiterbildung sieht vor, dass die digitale Identität des Routers RT auf einem Onlinespeicher als digitale Persönlichkeit des Nutzers gilt.

Wenn sich der Router RT ständig bei dem jeweiligen Nutzer N befindet, kann der Router RT als personalisierter (persönlicher) Integrationspunkt genutzt werden. Dafür ist der Router RT vorzugsweise Teil eines Gegenstandes, den ein Nutzer typischerweise ständig mit sich mitführt. Bei heutigen technischen Möglichkeiten kann dieser Gegenstand beispielsweise ein Mobiltelefon sein. Als personalisierter (persönlicher) Integrationspunkt noch besser eignen sich Gegenstände, die physisch noch stärker an einen Nutzer N gebunden sind als ein Smartphone SP, beispielsweise ein Fingerring, ein Piercing, eine Armbanduhr, ein Armband, eine Brille, ein Hörgerät oder ein Implantat.

Mit dem Router RT können personalisierte (persönliche) Verbindungen PVi zu vielen Geräten Gi, zum Internet und zu vielen anderen Netzwerken NWi (beispielsweise Internet, Fahrzeug, Heimnetzwerk) hergestellt werden. Dazu kann der Router RT mit Kommunikationsfähigkeiten ausgestattet werden, die verbreitet sind und/oder für den individuellen Nutzer N wichtig sind. Der Router RT kann über die Fähigkeit verfügen, zwischen diesen Techniken mittels Protokollumsetzung zu vermitteln. Beispielsweise sind heutzutage drahtlose Techniken wie WLAN und Bluetooth wichtig, um eine Kopplung an eine Vielfalt von diversen Consumer-Geräten Gi einfach und flexibel zu erreichen.

Eine Weiterbildung kann vorsehen, dass an dem Router RT angeschlossene Geräte Gi bei einem Herstellen einer Verbindung des jeweiligen Gerätes Gi mit dem Router RT (beispielsweise mittels Token) selbsttätig personalisiert werden (d.h. dem Nutzer N, dem der Router RT zugeordnet ist, zugeordnet werden) oder ihre Identität im Router RT personalisiert wird.

Über die Übertragungswege kann der Router RT auf viele verteilte Information und Medien zugreifen, kann diese aufbereiten und vielen im System befindlichen Geräten Gi zur Verfügung stellen. Dadurch können Informationen auf verschiedene Geräte Gi verteilt werden.

Eine Bedienung des Routers RT kann beispielsweise über intelligente Kleidung und Sportartikel vorgesehen sein. Eine Ausgabe von Bild- und/oder Textinformationen kann beispielsweise mittels einer Augmented Reality Brille ARB oder mittels eines mobilen Fernsehgeräts FGm und/oder über ein Fahrzeug-Display DI erfolgen. Mit einer angepassten Mensch-Maschine-Schnittstelle MMI können Funktionen des Routers RT, die häufig genutzt werden, von mehreren angeschlossenen Geräten Gi (in unterschiedlicher funktionaler Tiefe) bedienbar sein. Kernfunktionen des Routers RT können von mindestens einem der angeschlossenen Geräte Gi in unterschiedlicher funktionaler Tiefe mit angepasster Mensch-Maschine-Schnittstelle MMI fernsteuerbar und bedienbar sein.

Die Anwendung des hier beschriebenen Routers RT ermöglicht eine vollständige und hochintegrierte Vernetzung heterogener Geräte Gi, welche einen Zugriff auf jedwede Information oder Medien im Gesamtsystem anbietet. Dies ermöglicht einen nahtlosen Informationstransfer über verschiedene Domänen hinweg. Zentraler Bestandteil ist ein sogenannter Router RT, mit der sich ein Nutzer N digital identifiziert und eine Vernetzung mit beliebigen Netzwerken NWi und Geräten Gi aufbauen kann.

Der Router RT bildet eine digitale Identität und agiert als personalisierter Integrationspunkt. Dazu ist es von Vorteil, wenn er sich ständig bei dem jeweiligen Nutzer N befindet. Dazu ist der Router RT idealerweise in eine Umgebung eingebettet, die stark personengebunden ist. Dies kann im derzeitigen beispielsweise ein Smartphone SP sein. Noch vorteilhafter sind Gegenstände, die noch stärker an den Körper K Nutzers N gebunden sind, wie beispielsweise ein Fingerring, ein Piercing, ein Armbanduhr, ein Armband, eine Brille, ein Hörgerät oder ein Implantat.

Der Router RT hat die Aufgabe eine personalisierte Verbindung (Token) herzustellen (beispielsweise eine Internetverbindung) und beliebige physikalische Geräte Gi und Netzwerke NWi (beispielsweise Internet, Fahrzeugnetz, Heimnetz) anzubinden. Dazu kann der Router RT mit den wesentlichen weit verbreiteten Kommunikationstechniken ausgestattet sein und über die Fähigkeit verfügen, zwischen unterschiedlichen Netztechniken mittels Protokollumsetzung zu vermitteln. Beispielsweise sind heutzutage drahtlose Techniken wie WLAN und Bluetooth wichtig, um eine Kopplung an eine Vielfalt von Consumer-Geräten Gi einfach und flexibel zu erreichen. Mittels einer Verbindung mit dem Router RT werden die angeschlossenen Geräte Gi automatisch personalisiert (beispielsweise mittels Tokens) und mit aktuell zur Verfügung stehenden Netzwerken NWi verbunden. Auf einem Onlinespeicher kann eine digitale Identität des Routers RT wie eine digitale Persönlichkeit eines Nutzers Ni verwendet werden.

Über die Kommunikationswege kann der Router RT auf verteilte Information und Medien zugreifen, kann diese aufbereiten und allen im System befindlichen Geräten Gi zur Verfügung stellen. Informationen können dadurch auf verschiedene Geräte Gi verteilt werden.

Das in Fig. 2 gezeigte Anwendungsszenario für eine Anwendung des Routers RT für Rücksitzunterhaltung (Rear Seat Entertainment) sieht vor, dass an dem Router RT ein Display DI des Fahrzeugs FZ, ein Smartphone SP, eine Smartwatch SW und ein Bluetooth-Kopfhörer BK angeschlossen ist. Das Smartphone SP befindet sich beispielsweise in einer Aktentasche und beinhaltet Video- und Audiodaten. Das Smartphone SP übermittelt beispielsweise folgende Fähigkeitsangaben zum Router RT: eine Displaygröße, Lautsprecherverfügbarkeit, Kameraart, Touchscreen-Art und auf dem Gerät verfügbare Inhalte wie beispielsweise Informationen und Medien.

Das Display DI des Rücksitzunterhaltungssystems übermittelt folgende Fähigkeitsangaben: Displaygröße und Lautsprecherverfügbarkeit. Die Smartwatch SW übermittelt folgende Fähigkeitsangaben: Displaygröße, Betätigungsknopf-Verfügbarkeit, Touchscreen-Art. Der Bluetooth-Kopfhörer BK übermittelt folgende Fähigkeitsangaben: Lautsprecher, Hardwarebutton.

Folgende Gerätekonfigurationen werden für den Aufenthalt eines Nutzers N im Rücksitzbereich erstellt und an die Geräte Gi übermittelt. Für das Smartphone werden Medien, Bedienfunktionen und Anzeigeinhalte ausgewählt. Für das Display DI besteht beispielsweise keine Gerätekonfigurationsmöglichkeit. Für die Smartwatch SW werden Medien, Bedienfunktionen und Anzeigeinhalte ausgewählt. Für die Kopfhörer BK besteht beispielsweise keine Gerätekonfigurationsmöglichkeit.

Der Nutzer N kann mittels einer Benutzerschnittstelle BS des Smartphones SP oder der Smartwatch SW Medien des Smartphones SP durchsuchen und auswählen, ob und wie sie wiedergegeben werden. Aufgrund von Routing-Fähigkeiten und Transcodier-Fähigkeiten des Routers RT sind viele Kombinationen möglich.

Wenn es sich bei dem Medium um ein Video handelt, kann der Nutzer N auswählen, ob das Bild auf dem Smartphone SP, der Smartwatch SW oder auf einem Display DI des Rücksitz-Unterhaltungssystems RSE ausgegeben wird.

Wenn es sich bei dem Medium um eine Audio-Datei handelt, kann der Nutzer N auswählen, ob die Audio-Datei über das Smartphone SP, über ein Display des Rücksitz-Unterhaltungssystems oder über einen Kopfhörer mit Bluetooth-Schnittstelle wiedergegeben werden wird.

Wenn sich der Nutzer N zuhause befindet, kann das Smartphone SP immer noch der Medienlieferant sein. Aber das Display DI des Rücksitz-Unterhaltungssystems RSE befindet sich nicht mehr in Reichweite des Routers RT. Statt des Rücksitz-Unterhaltungssystems RSE übermittelt das Fernsehgerät FG seine Fähigkeiten zum Router RT und empfängt vom Router RT seine Gerätekonfiguration GK (beispielsweise Auflösung, Audio, Fernbedienung). Über den Router RT (beispielsweise eine Smartwatch) kann nun das Video einschließlich der Audio-Daten zum Fernsehgerät FG übermittelt (gestreamt) werden, das eine größere Auflösung als das Display DI des Rücksitz-Unterhaltungssystems RSE aufweist.

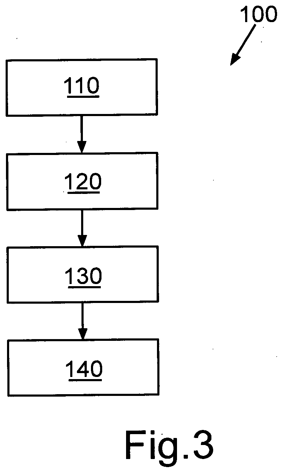

Das in Fig. 3 gezeigte Verfahren 100 zum Empfangen und Verteilen von Daten D umfasst folgende Schritte. In einem ersten Schritt 110 werden erste Fähigkeitsparameter FP von mindestens zwei Geräten Gi übermittelt, die an einem Router RT angeschlossen sind. In einem zweiten Schritt 120 wird mindestens eines der Geräte Gi unter Berücksichtigung der Fähigkeitsparameter FP ausgewählt und/oder konfiguriert. In einem dritten Schritt 130 werden Daten D von mindestens einem der Geräte Gi empfangen. In einem vierten Schritt 140 werden empfangene Daten D an mindestens eines der Geräte Gi verteilt.

Das vorgeschlagene Verfahren 100 zum Empfangen und Verteilen von Daten D bietet mindestens einen der folgenden Vorteile: Unterstützung mehrerer kabelgebundener und/oder drahtloser Kommunikationstechniken; Bereitstellung von offenen Schnittstellen zur Datenkommunikation sowie Steuerung unterschiedlicher Geräte (insbesondere Endgeräte); Protokollumsetzung von und zu unterschiedlichen Protokollstandards; nahtloser Zugriff auf Information im verteilten System; Sammlung, Aufbereitung und Bereitstellung von Information und Abbildung einer digitalen Identität.

Der erfindungsgemäße Router RT ermöglicht ein nahtloses Austauschen von Informationen über Systemgrenzen hinweg. Außerdem können einzelne Geräte Gi mittels des Router RT personalisiert werden. Das erfinderische Konzept kann auch eine natürliche Interaktion von Mensch und Technik fördern, in der die Hände eines Nutzers N weitestgehend frei bleiben.

## Patentansprüche

1. Router (RT) zum Empfangen und Verteilen von Daten (D), der umfasst:
- einen Fähigkeitsparameter-Empfänger (FPE) zum Empfangen (110) von Fähigkeitsparametern (FP) von mindestens zwei Geräten (Gi), die an dem Router (RT) anschließbar sind;
- einen Gerätekonfigurator (GK) zum Auswählen und/oder Konfigurieren (120) mindestens eines der Geräte (Gi) unter Berücksichtigung der Fähigkeitsparameter (FP);
- einen Nutzdaten-Empfänger (NDE) zum Empfangen (130) von Daten (D) von mindestens einem der Geräte (Gi); und
- einen Nutzdaten-Verteiler (NDV) zum Verteilen (140) von Daten (D) an mindestens eines der Geräte (Gi);
wobei der Router (RT) Teil eines Mobiltelefons, eines Implantats, einer Uhr, einer Brille, eines Hörgeräts, eines Gürtels, einer Fußfessel, eines Schmuckstücks, eines Piercings, eines Armbands und/oder eines anderen Kleidungsgegenstands ist und dazu vorbereitet ist, den Nutzer (N) gegenüber Geräten (Gi), die sich in der Umgebung des Nutzers (N) befinden, erkennen zu geben und/oder auszuweisen,
**dadurch gekennzeichnet, dass** der Gerätekonfigurator (GK) dazu vorbereitet ist, ausgehend von von den Geräten (Gi) gemeldeten Fähigkeiten gerätespezifische Gerätekonfigurationsdaten (GKD) zu erstellen und an das jeweilige Gerät (Gi) auszuliefern.

2. Router (RT) nach Anspruch 1, **dadurch gekennzeichnet, dass** der Fähigkeitsparameter (FP) eine Angabe über eine Informations- und/oder Medienart, eine Angabe über ein Protokoll, eine Angabe über eine Displaygröße, ein Angabe über ein Auflösungsvermögen, eine Angabe über eine Bandbreite und/oder eine Angabe über eine Bedienart umfasst.

3. Router (RT) nach einem der vorhergehenden Ansprüche, **dadurch gekennzeichnet, dass** der Router (RT) einen Gerätekonfigurator (GK) zum Auswählen und/oder Konfigurieren eines der Geräte (Gi) aufweist, die an dem Nutzdaten-Empfänger (NDE) und/oder an dem Nutzdaten-Verteiler (NDV) angeschlossen sind.

4. Router (RT) nach einem der vorhergehenden Ansprüche, **dadurch gekennzeichnet, dass** der Router (RT) einen ersten Protokollwandler (PW1) zum Wandeln von Daten (D), die nach einem ersten Protokoll codiert sind, in Daten (D) aufweist, die nach einem zweiten Protokoll codiert sind.

5. Router (RT) nach Anspruch 4, **dadurch gekennzeichnet, dass** der Router (RT) einen zweiten Protokollwandler (PW2) zum Wandeln von Daten (D), die nach einem zweiten Protokoll codiert sind, in über den ersten Protokollwandler (PW1) zu versendende Daten (D) aufweist, die nach einem dritten Protokoll codiert sind.

6. Router (RT) nach einem der vorhergehenden Ansprüche, **dadurch gekennzeichnet, dass** das erste Protokoll ein LAN-Protokoll, ein WLAN-Protokoll, ein Mobilfunk-Protokoll, ein Bluetooth-Protokoll, ein NFC-Protokoll oder ein Zigbee-Protokoll ist, und/oder dass das zweite Protokoll ein LAN-Protokoll, ein WLAN-Protokoll, ein Mobilfunk-Protokoll, ein Bluetooth-Protokoll, ein NFC-Protokoll oder ein Zigbee-Protokoll ist.

7. Router (RT) nach einem der vorhergehenden Ansprüche, **dadurch gekennzeichnet, dass** der Router (RT) mindestens zwei Teilvorrichtungen umfasst, die voneinander mechanisch getrennt sind und miteinander über mindestens eine folgender Schnittstellen verbunden sind: eine Funkschnittstelle, eine Infrarot-Schnittstelle, eine Ultraschallschnittstelle.

8. Fahrzeug (FZ),
**dadurch gekennzeichnet, dass**
das Fahrzeug (FZ) einen Router (RT) zum Empfangen und Verteilen von Daten (D) nach einem der vorhergehenden Ansprüche aufweist.

9. Verfahren (100) zum Empfangen und Verteilen von Daten (D), wobei das Verfahren (100) folgende Schritte umfasst:
- Übermitteln (110) von Fähigkeitsparametern (FP) von mindestens zwei Geräten (Gi), die an einem Router (RT) anschließbar sind, wobei der Router (RT) Teil eines Mobiltelefons, eines Implantats, einer Uhr, einer Brille, eines Hörgeräts, eines Gürtels, einer Fußfessel, eines Schmuckstücks, eines Piercings, eines Armbands und/oder eines anderen Kleidungsgegenstands ist und dazu vorbereitet ist, den Nutzer (N) gegenüber Geräten (Gi), die sich in der Umgebung des Nutzers (N) befinden, erkennen zu geben und/oder auszuweisen;
- Auswählen und/oder Konfigurieren (120) mindestens eines der Geräte (Gi) unter Berücksichtigung der Fähigkeitsparameter (FP);
- Empfangen (130) von Daten (D) von mindestens einem der Geräte (Gi);
- Verteilen (140) von empfangenen Daten (D) an mindestens eines der Geräte (Gi),
**gekennzeichnet durch** den Schritt: Erstellen und Ausliefern gerätespezifischer Gerätekonfigurationsdaten (GKD) an das jeweilige Gerät (Gi) ausgehend von von den Geräten (Gi) gemeldeten Fähigkeiten.

## Claims

1. Router (RT) for receiving and distributing data (D), comprising:
- a capability parameter receiver (FPE) for receiving (110) capability parameters (FP) from at least two devices (Gi) that are connectable to the router (RT);
- a device configurator (GK) for selecting and/or configuring (120) at least one of the devices (Gi) taking account of the capability parameters (FP);
- a user data receiver (NDE) for receiving (130) data (D) from at least one of the devices (Gi); and
- a user data manifold (NDV) for distributing (140) data (D) to at least one of the devices (Gi);
wherein the router (RT) is part of a mobile telephone, an implant, a watch, eyeglasses, a hearing aid, a belt, an ankle tag, a piece of jewellery, a piercing, a bracelet and/or another article of clothing and is prepared to reveal and/or identify the user (N) in relation to devices (Gi) that are located in the user's (N) surroundings,
**characterised in that** the device configurator (GK) is prepared to create device-specific device configuration data (GKD) based on capabilities reported by the devices (Gi) and to deliver them to the particular device (Gi).

2. Router (RT) according to claim 1, **characterised in that** the capability parameters (FP) comprise a specification of a type of information and/or type of media, a specification of a protocol, a specification of a display size, a specification of a resolution capability, a specification of a bandwidth and/or a specification of a mode of operation.

3. Router (RT) according to any of the preceding claims, **characterised in that** the router (RT) has a device configurator (GK) for selecting and/or configuring one of the devices (Gi) that are connected to the user data receiver (NDE) and/or to the user data manifold (NDV).

4. Router (RT) according to any of the preceding claims, **characterised in that** the router (RT) has a first protocol converter (PW1) for converting data (D) that are encoded according to a first protocol into data (D) that are encoded according to a second protocol.

5. Router (RT) according to claim 4, **characterised in that** the router (RT) has a second protocol converter (PW2) for converting data (D) that are encoded according to a second protocol into data (D) to be sent via the first protocol converter (PW1) that are encoded according to a third protocol.

6. Router (RT) according to any of the preceding claims, **characterised in that** the first protocol is a LAN protocol, a WLAN protocol, a mobile communications protocol, a Bluetooth protocol, an NFC protocol or a Zigbee protocol and/or that the second protocol is a LAN protocol, a WLAN protocol, a mobile communications protocol, a Bluetooth protocol, an NFC protocol or a Zigbee protocol.

7. Router (RT) according to any of the preceding claims, **characterised in that** the router (RT) comprises at least two partial devices that are mechanically separate from one another and are connected with one another via at least one of the following interfaces: a radio interface, an infrared interface, an ultrasound interface.

8. Vehicle (FZ),
**characterised in that**
the vehicle (FZ) has a router (RT) for receiving and distributing data (D) according to any of the preceding claims.

9. Method (100) for receiving and distributing data (D), wherein the method (100) comprises the following steps:
- transfer (110) of capability parameters (FP) from at least two devices (Gi) that are connectable to a router (RT), wherein the router (RT) is part of a mobile telephone, an implant, a watch, eyeglasses, a hearing aid, a belt, an ankle tag, a piece of jewellery, a piercing, a bracelet and/or another article of clothing and is prepared to reveal and/or identify the user (N) in relation to devices (Gi) that are located in the user's (N) surroundings;
- selection and/or configuration (120) of at least one of the devices (Gi) taking account of the capability parameters (FP);
- receiving (130) of data (D) from at least one of the devices (Gi);
- distribution (140) of received data (D) to at least one of the devices (Gi),
**characterised by** the step: creation and delivery of device-specific device configuration data (GKD) to the particular device (Gi) based on capabilities reported by the devices (Gi).

## Revendications

1. Routeur (RT) destiné à recevoir et distribuer des données (D), qui comprend :
- un récepteur de paramètres de capacité (FPE) destiné à recevoir (110) des paramètres de capacité (FP) d'au moins deux appareils (Gi), qui peuvent être raccordés au routeur (RT) ;
- un configurateur d'appareil (GK) destiné à sélectionner et/ou configurer (120) au moins un des appareils (Gi) avec prise en compte des paramètres de capacité (FP) ;
- un récepteur de données utiles (NDE) destiné à recevoir (130) des données (D) d'au moins un des appareils (Gi) ; et
- un distributeur de données utiles (NDV) destiné à distribuer (140) des données (D) sur au moins un des appareils (Gi) ;
dans lequel le routeur (RT) fait partie d'un téléphone mobile, d'un implant, d'une montre, de lunettes, d'un appareil auditif, d'une ceinture, d'un bracelet électronique, d'un bijou, d'un piercing, d'un bracelet et/ou d'un autre objet vestimentaire et est destiné à indiquer et/ou à désigner à l'utilisateur (N) des appareils (Gi) qui se situent dans l'environnement de l'utilisateur (N),
**caractérisé en ce que** le configurateur d'appareil (GK) est destiné à créer des données de configuration d'appareil (GKD) spécifiques à l'appareil à partir des capacités signalées par les appareils (Gi) et à les délivrer à l'appareil (Gi) respectif.

2. Routeur (RT) selon la revendication 1, **caractérisé en ce que** le paramètre de capacité (FP) comprend une indication concernant un type d'information et/ou de support, une indication concernant un protocole, une indication concernant une taille d'écran, une indication concernant une résolution, une indication concernant une bande passante et/ou une indication concernant un type de commande.

3. Routeur (RT) selon l'une quelconque des revendications précédentes, **caractérisé en ce que** le routeur (RT) présente un configurateur d'appareil (GK) destiné à sélectionner et/ou configurer un des appareils (Gi), qui sont raccordés au récepteur de données utiles (NDE) et/ou au distributeur de données utiles (NDV).

4. Routeur (RT) selon l'une quelconque des revendications précédentes, **caractérisé en ce que** le routeur (RT) présente un premier convertisseur de protocole (PW1) destiné à convertir des données (D) qui sont codées selon un premier protocole en données (D) qui sont codées selon un deuxième protocole.

5. Routeur (RT) selon la revendication 4, **caractérisé en ce que** le routeur (RT) présente un deuxième convertisseur de protocole (PW2) destiné à convertir des données (D) qui sont codées selon un deuxième protocole en données (D) à envoyer par l'intermédiaire du premier convertisseur de protocole (PW1), qui sont codées selon un troisième protocole.

6. Routeur (RT) selon l'une quelconque des revendications précédentes, **caractérisé en ce que** le premier protocole est un protocole LAN, un protocole WLAN, un protocole de téléphonie mobile, un protocole Bluetooth, un protocole NFC ou un protocole Zigbee, et/ou **en ce que** le deuxième protocole est un protocole LAN, un protocole WLAN, un protocole de téléphonie mobile, un protocole Bluetooth, un protocole NFC ou un protocole Zigbee.

7. Routeur (RT) selon l'une quelconque des revendications précédentes, **caractérisé en ce que** le routeur (RT) comprend au moins deux dispositifs partiels, qui sont séparés mécaniquement l'un de l'autre et sont reliés l'un à l'autre par l'intermédiaire d'au moins une interface suivante : une interface radio, une interface à infrarouge, une interface à ultrasons.

8. Véhicule (FZ),
**caractérisé en ce que**
le véhicule (FZ) présente un routeur (RT) destiné à recevoir et distribuer des données (D) selon l'une quelconque des revendications précédentes.

9. Procédé (100) destiné à recevoir et distribuer des données (D), dans lequel le procédé (100) comprend les étapes suivantes :
- la transmission (110) de paramètres de capacité (FP) par au moins deux appareils (Gi), qui peuvent être raccordés à un routeur (RT), dans lequel le routeur (RT) fait partie d'un téléphone mobile, d'un implant, d'une montre, de lunettes, d'un appareil auditif, d'une ceinture, d'un bracelet électronique, d'un bijou, d'un piercing, d'un bracelet et/ou d'un autre objet vestimentaire et est destiné à indiquer et/ou à désigner à l'utilisateur (N) des appareils (Gi) qui se situent dans l'environnement de l'utilisateur (N) ;
- la sélection et/ou la configuration (120) d'au moins un des appareils (Gi) avec prise en compte des paramètres de capacité (FP) ;
- la réception (130) de données (D) d'au moins un des appareils (Gi) ;
- la distribution (140) de données (D) reçues à au moins un des appareils (Gi),
**caractérisé par** l'étape : de création et de délivrance de données de configuration d'appareil (GKD) spécifiques à l'appareil à l'appareil (Gi) respectif à partir des capacités signalées par les appareils (Gi).
